# EUROPÄISCHE PATENTSCHRIFT

(11) **EP 0 901 865 B1**
(45) Veröffentlichungstag und Bekanntmachung des Hinweises auf die Patenterteilung: **05.07.2006**
(21) Anmeldenummer: 98116505.3
(22) Anmeldetag: 01.09.1998
(51) Int. Cl.: B23K 9/095, B23K 9/32

(54) **Steuervorrichtung zum Steuern eines Schweissgerätes sowie ein Verfahren hierfür**
Welding control method and apparatus
Méthode et appareillage de commande de soudage

(30) Priorität: 09.09.1997 AT 151397
(43) Veröffentlichungstag der Anmeldung: 17.03.1999
(73) Patentinhaber: Fronius International GmbH, 4643 Pettenbach (AT)
(72) Erfinder: Friedl, Helmut, 4621 Sipbachzell (AT); Neubacher, Günther, 4651 Stadl-Paura (AT); Hackl, Heinrich, A-4551 Ried/Traunkreis (AT)
(74) Vertreter: Secklehner, Günter

(56) Entgegenhaltungen:
- WO-A-98/34751
- DE-U- 9 301 390
- FR-A- 1 566 627
- US-A- 4 885 575
- Controlo Multiplice de Soldadura Serratron 8000-NF, versão 2.1, 1994/50, Serra Soldadura S.A. Barcelona, Dezember 1994.

## Beschreibung

Die Erfindung betrifft eine Steuervorrichtung und ein Verfahren zum Steuern eines Schweißgerätes, wie es im Oberbegriff des Anspruches 1 und 5 beschrieben ist.

Es sind bereits Steuervorrichtungen bzw. Verfahren zum Steuern eines Schweißgerätes bekannt, bei denen über eine Eingabe- und/oder Anzeigevorrichtung unterschiedliche Schweißparameter eingestellt bzw. angezeigt werden können, wobei entsprechend den eingestellten Schweißparameter ein Schweißprozeß für ein Schweißgerät durchgeführt wird. Dabei sind bei den bekannten Eingabe- und/oder Anzeigevorrichtungen Funktionstasten angeordnet, über die der Benutzer des Schweißgerätes unterschiedliche Funktionen abrufen kann. Weiters weist die Eingabe- und/oder Anzeigevorrichtung standardmäßige Einstellorgane bzw. Anzeigeorgane auf, über die der Benutzer wiederum vorgegebene Schweißparameter auswählen und verändern kann. Bei den Funktionstasten hat der Benutzer die Möglichkeit, daß durch Auswahl eines entsprechenden Schweißprozesses unterschiedliche Funktionen diesen Funktionstasten zugeordnet werden. Dies geschieht insofern, indem durch Auswahl eines Schweißprozesses von der Steuervorrichtung die einzelnen Funktionstasten mit entsprechenden Funktionen belegt werden, sodaß durch Betätigen dieser Funktionstasten der Schweißparameter bzw. der Funktionsablauf aufgerufen wird. Nachteilig ist bei einem derartigen Verfahren bzw. bei einer derartigen Steuervorrichtung, daß der Benutzer durch die unterschiedlichen Schweißprozesse nicht genau erkennen kann, welche Funktion den einzelnen Funktionstasten zugeteilt ist, sodaß dieser zur Bedienung immer eine Schweißgerätebeschreibung zur Hand haben muß.

Aus der Bedienungsanleitung des SERRATON 8000-NF der Serra Soldadura S.A., Barcelona, Dezember 1994 ist eine Steuervorrichtung für ein Schweißgerät bekannt, mit der Funktionsabläufe bzw. Programme und die Parameter dieser Funktionsabläufe einstellbar sind. Die Funktionsabläufe und deren Parameter lassen sich über eine Eingabe- und Anzeigevorrichtung und Steuerorgane programmieren, wobei hierzu ein Speicher vorgesehen ist.

Die DE 93 01 390 U beschreibt ein Schweißgerät mit einem eine Bedienungsfläche aufweisenden Gehäuse. Die Bedienungsfläche weist mehrere Anzeigeflächen mit mehreren, elektronisch ansteuerbaren Anzeigepositionen auf. Jede der Anzeigepositionen ist für eine gewisse Funktion des Schweißgerätes vorgesehen und es sind die unterschiedlichen Funktionen, d.h. die unterschiedlichen Anzeigepositionen, über ein erstes Betätigungselement durchschaltbar. Über ein zweites Betätigungselement sind die Parameter des fix der jeweiligen Anzeigcpositionen zugewiesenen Funktionsablaufs einstellbar.

Die US 4,885,575 A betrifft ein Verfahren und eine Vorrichtung zur Darstellung von Informationen auf einem Computerdisplay. Aus diesem Dokument ist eine Vorrichtung bekannt, bei der durch einen Softkey Parameter oder eine Funktion abgerufen werden können. Die Softkcys sind dabei Tasten eines Tastatur/Anzeige - Verbandes, deren Funktion bei der Betätigung von der Anzeige abhängig ist. Durch die Anzeige wird dem Benutzer angezeigt, welche Funktion mit welcher Taste aufgerufen werden kann. Eine Taste kann auch umprogrammiert werden und eine andere Funktion erhalten. Dadurch kann eine erhöhte Flexibilität erreicht werden - verschiedene Parameter können an gleichen Stellen der Anzeige zu verschiedenen Zeiten angezeigt werden bzw. verschiedene Parameter können an verschiedenen Stellen der Anzeige zur gleichen Zeiten angezeigt werden. Das Dokument US 4,885,575 A beschreibt auch eine Methode, wie Parameter mehrerer an einem Bussystem angeschlossener Geräte geändert werden können bzw. wie für einen Parameter unterschiedliche Wertebereiche eingestellt werden können.

Der vorliegenden Erfindung liegt die Aufgabe zugrunde, eine Steuervorrichtung und ein Verfahren zum Steuern eines Schweißgerätes zu schaffen, bei dem der Benutzer sich selbständig seine Oberfläche zum Bedienen des Schweißgerätes gestalten kann.

Diese Aufgabe der Erfindung wird durch die Merkmale des Kennzeichenteils des Anspruches 1 gelöst. Vorteilhaft ist hierbei, daß durch die Verwendung von Steuerorganen an der Eingabe- und/oder Anzeigevorrichtung der Benutzer die Möglichkeit hat, sich selbständig eine Oberfläche zu gestalten, sodaß eine Vereinfachung der Bedienung des Schweißgerätes geschaffen wird. Ein weiterer Vorteil liegt darin, daß weitere nicht an der Eingabe- und/oder Anzeigevorrichtung angegebene Schweißparameter über die Steuerorgane aktiviert werden können, wodurch eine exakte Anpassung des Schweißprozesses vom Benutzer durchgeführt werden kann, sodaß eine Verbesserung der Schweißqualität erzielt wird.

Weitere vorteilhafte Ausbildungen sind in den Ansprüchen 2 bis 4 beschrieben. Die damit erzielbaren Vorteile sind der detaillierten Figurenbeschreibung zu entnehmen.

Die Erfindung umfaßt weiters auch ein Verfahren zum Steuern einer Schweißgerätes, wie es im Oberbegriff des Anspruches 5 beschrieben ist.

Das Verfahren zum Steuern eines Schweißgerätes durch die Merkmale im Kennzeichenteil des Anspruches 5 beschrieben. Vorteilhaft ist hierbei, daß durch die Funktion des freien Belegens eines Steuerorgans mit unterschiedlichen Funktionen, wie beispielsweise einem Anzeigemodus oder einen Funktionsablauf der Benutzer die Oberfläche der Eingabe- und/oder Anzeigevorrichtung auf ihn abstimmen kann, sodaß ein einfaches Bedienen des Schweißgerätes erreicht wird. Ein weiterer nicht vorhersehbarer Vorteil liegt darin, daß dadurch die Möglichkeit geschaffen wird, eine Vielzahl von Schweißparametern auszuwählen, wobei die Oberfläche der Eingabe- und/oder Anzeigevorrichtung nur mit den notwcndigsten Schweißparametern ausgestattet ist und somit noch zusätzliche Schweißparameter angezeigt werden können. Ein weiterer Vorteil liegt darin, daß durch die Belegung der Steuerorgane mit Funktionsabläufen sich der Benutzer immer wiederkehrende Funktionsabläufe bzw. Arbeitsschritte speichern kann, wodurch eine Vereinfachung bei der Bedienung des Schweißgerätes erreicht wird bzw. daß komplizierte Arbeitsschritte vom Benutzer nur einmal durchgeführt werden müssen, die anschließend durch Belegung eines Steuerorgans immer wieder abrufbar sind.

Weitere vorteilhafte Maßnahmen sind in den Ansprüchen 6 bis 13 beschrieben. Die damit erzielbaren Vorteile sind aus der detaillierten Figurenbeschreibung zu entnehmen.

Die Erfindung wird im nachfolgenden, anhand des in den Zeichnungen dargestellten Ausführungsbeispiels näher erläutert.

Es zeigen:
- Fig. 1: ein Übersichtsschaubild eines Schweißgerätes in vereinfachter schematischer Darstellung;
- Fig. 2: ein Blockschaltbild des Schweißgerätes mit der erfindungsgemäßen Eingabe und/oder Anzeigevorrichtung in vereinfachter schematischer Darstellung;
- Fig. 3: eine Ausbildung der erfindungsgemäßen Eingabe- und/oder Anzeigevorrichtung in vereinfachter und schematischer Darstellung.

Einführend sei festgehalten, daß in dem beschriebenen Ausführungsbeispiel gleiche Teile mit gleichen Bezugszeichen bzw. gleichen Bauteilbezeichnungen versehen sind, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z. B. "oben", "unten", "seitlich" usw. auf die unmittelbare beschriebene sowie dargestellte Figur bezogen und sind bei einer Lageänderung sinngemäß auf die neue Lage zu übertragen. Weiters können auch Einzelmerkmale aus dem gezeigten Ausführungsbeispiel für sich eigenständige, erfindungsgemäße Lösungen darstellen.

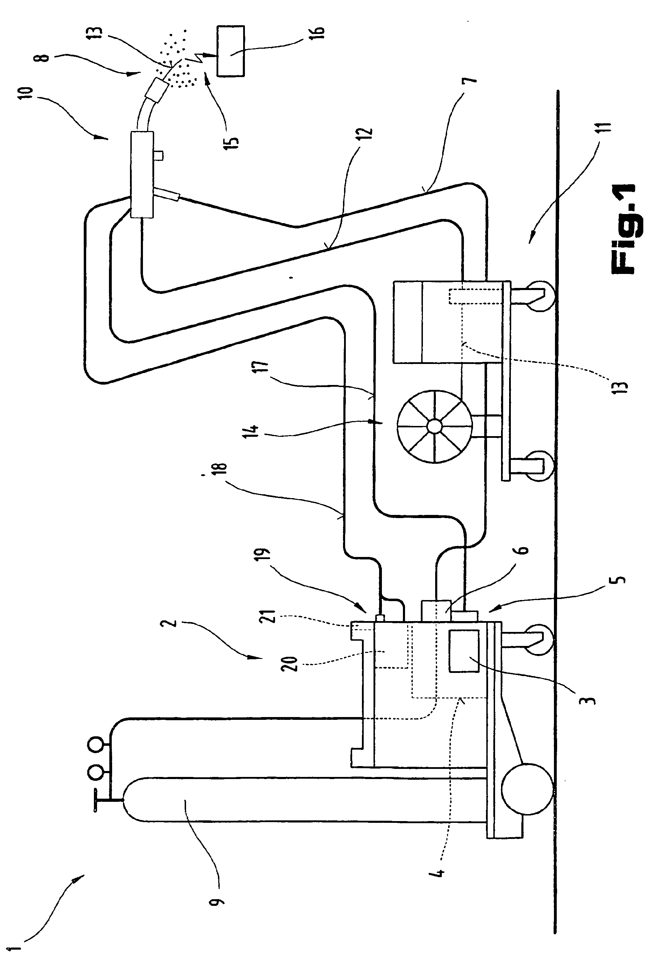

In Fig. 1 ist ein Schweißgerät 1 für verschiedenste Schweißverfahren, wie z. B. zum MIG/MAG-Schweißen bzw. TIG-Schweißen gezeigt. Das Schweißgerät 1 umfaßt eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise Stickstoff, Helium oder Argon u. dgl., zwischen einem Gasspeicher 9 und einem Schweißbrenner 10 angeordnet ist.

Zudem wird über die Steuervorrichtung 4 auch noch ein Drahtvorschubgerät 11 angesteuert, wobei über eine Versorgungsleitung 12 ein Schweißdraht 13 von einer Vorratstrommel 14 in den Bereich des Schweißbrenners 10 zugeführt wird. Der Strom zum Aufbau eines Lichtbogen 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt.

Zum Kühlen des Schweißbrenners 10 wird über einen Kühlkreislauf 18 der Schweißbrenner 10 unter Zwischenschaltung eines Strömungswächters 19 mit einem Wasserbehälter 20 verbunden, wodurch bei der Inbetriebnahme des Schweißbrenners 10 der Kühlkreislauf 18 von der Steuervorrichtung 4 gestartet wird und somit eine Kühlung des Schweißbrenners 10 bzw. des Schweißdrahtes 13 bewirkt wird.

Weiters weist das Schweißgerät 1 eine Eingabe- und/oder Anzeigevorrichtung 21 auf, über die die unterschiedlichsten Schweißparameter bzw. Betriebsarten des Schweißgerätes 1 eingestellt werden können. Dabei werden die über die Eingabe- und/oder Anzeigevorrichtung 21 eingestellten Schweißparameter an die Steuervorrichtung 4 weitergeleitet und von dieser werden anschließend die einzelnen Komponenten des Schweißgerätes 1 angesteuert.

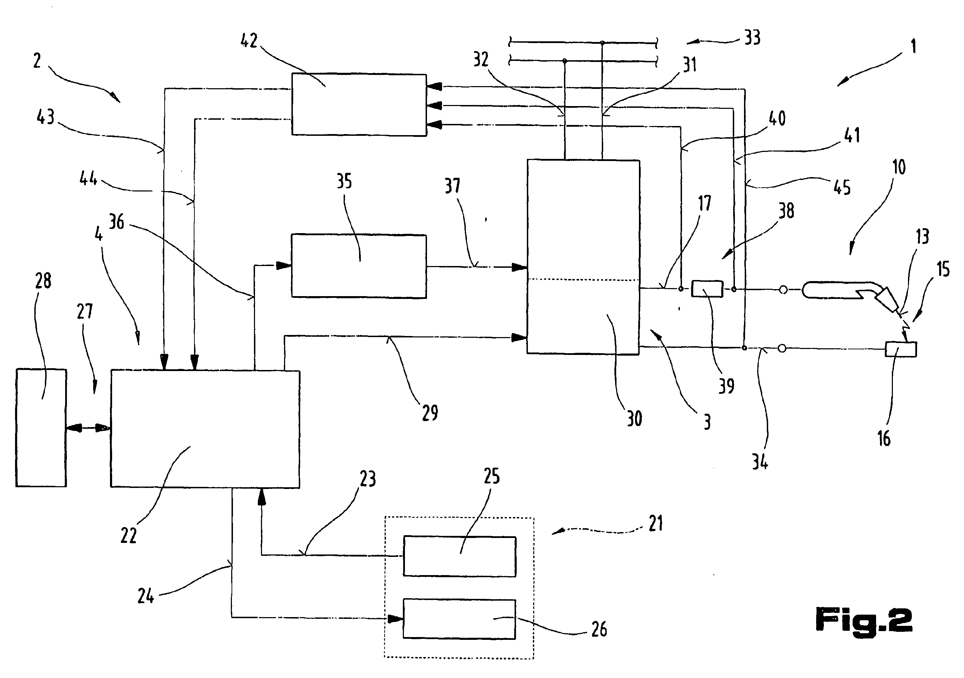

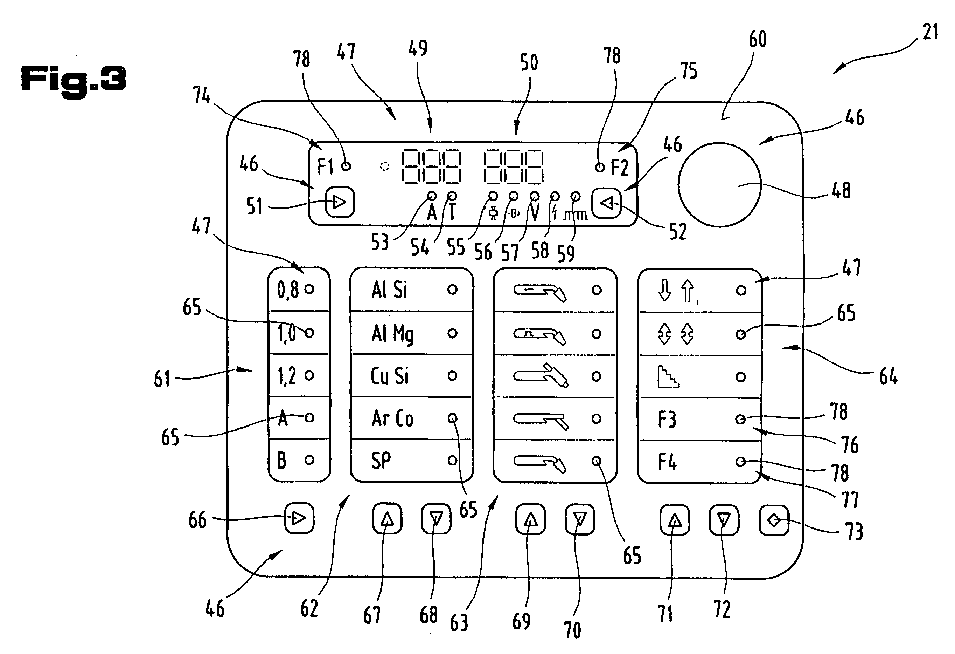

In den Fig. 2 und 3 ist ein Blockschaltbild des Schweißgerätes 1 und eine detaillierte Darstellung der erfindungsgemäßen Eingabe- und/oder Anzeigevorrichtung 21 dargestellt.

Die Steuervorrichtung 4 wird aus einer Mikroprozessorsteuerung 22 gebildet. An einem Eingang der Steuervorrichtung 4 ist über mehrere Leitungen 23, 24, wobei jedoch aufgrund der Übersichtlichkeit halber nur jeweils eine Leitung 23, 24 dargestellt ist, die Eingabe- und/oder Anzeigevorrichtung 21 angeschlossen. Dabei ist es jedoch möglich, daß die Eingabe- und/oder Anzeigevorrichtung 21 durch getrennte Bereiche, also durch eine Eingabevorrichtung 25 und eine Ausgabevorrichtung 26 gebildet sein kann. Weiters ist es möglich, daß die Eingabevorrichtung 25 durch eine Tastatur oder durch jegliche andere Arten von Eingabemöglichkeiten, wie z. B. Potentiometer, Touch-Screen oder Taster usw., gebildet sein kann.

Die Ausgabevorrichtung 26 kann beispielsweise durch eine Displayanzeige eine LED-Anzeige, eine LCD-Anzeige, eine Digital-Anzeige, einen Bildschirm oder einen Touch-Screen gebildet werden. Der Datenaustausch zwischen der Eingabe- und/oder Anzeigevorrichtung 21, insbesondere der Eingabevorrichtung 25 und der Ausgabevorrichtung 26 erfolgt über die Leitungen 23, 24.

An weiteren Ein- und/oder Ausgängen der Mikroprozessorsteuerung 22 ist beispielsweise über ein Bussystem 27, das beispielsweise aus Adress- und Datenleitungen gebildet wird, ein Speicher 28 angeschlossen.

Die Steuervorrichtung 4 ist über zumindest eine Leitung 29 mit dem Leistungsteil 3 verbunden, wobei über die Leitung 29 der Datenaustausch zwischen dem Leistungsteil 3 und der Steuervorrichtung 4 durchgeführt wird. Der Leistungsteil 3 kann beispielsweise durch eine primärgetaktete Inverterstromquelle 30 gebildet werden. Damit das Leistungsteil 3 mit Strom und Spannung versorgt werden kann, ist das Leistungsteil 3 über Versorgungsleitungen 31, 32 mit einem Spannungsversorgungsnetz 33 verbunden. Selbstverständlich ist es möglich, daß anstelle des Spannungsversorgungsnetzes 33 jede andere Art von Energiequelle, wie beispielsweise eine Batterie, zur Speisung des Leistungsteils 3 verwendet werden kann.

Das Leistungsteil 3, insbesondere die Inverterstromquelle 30, hat die Aufgabe, die vom Spannungsversorgungsnetz 33 gelieferte Energie in eine entsprechende Schweißenergie umzuwandeln, wie dies bereits aus dem Stand der Technik bekannt ist. Dazu ist der Leistungsteil 3 über die Versorgungsleitung 17 mit dem Schweißbrenner 10 verbunden, wogegen das Werkstück 16 über eine Versorgungsleitung 34 ebenfalls mit dem Leistungsteil 3 verbunden ist, sodaß ein Stromkreislauf aufgebaut werden kann.

Damit nunmehr der Lichtbogen 15 zwischen dem Schweißdraht 13 und dem Werkstück 16 gezündet werden kann, ist es beispielsweise möglich, daß das Schweißgerät 1 einen Hochfrequenzgenerator 35 aufweist. Dieser ist über Leitungen 36, 37 sowohl mit der Steuervorrichtung 4 als auch mit dem Leistungsteil 3 verbunden. Selbstverständlich ist es möglich, daß zum Zünden des Lichtbogens 15 jedes andere zum Stand der Technik zählende Verfahren eingesetzt werden kann. Damit ein Lichtbogen 15 zwischen dem Schweißdraht 13 und dem Werkstück 16 gezündet werden kann, ist es beispielsweise möglich, daß von der Steuervorrichtung 4 ein Steuersignal an den Hochfrequenzgenerator 35 übersandt wird. Daraufhin sendet der Hochfrequenzgenerator 35 Hochfrequenzimpulse an das Leistungsteil 3, wobei anschließend diese Hochfrequenzimpulse auf die Schweißenergie aufmoduliert wird, sodaß ein einfaches Zünden des Lichtbogens 15 erreicht wird.

Damit ein Überwachen des Schweißprozesses möglich ist, ist in der Versorgungsleitung 17 eine Meßvorrichtung 38 angeordnet. Die Meßvorrichtung 38 kann dabei durch einen zum Stand der Technik zählenden Shunt 39 gebildet werden, sodaß der Stromfluß über die Versorgungsleitung 17 von der Meßvorrichtung 38 erfaßt werden kann. Dazu sind beidseits des Shunts 39 Leitungen 40, 41 mit der Versorgungsleitung 17 verbunden, die anschließend mit einer Wandlervorrichtung 42 verbunden sind. Die Wandlervorrichtung 42 wandelt das gemessene Signal in ein digitales Signal um und übergibt das Signal über Leitungen 43, 44 an die Steuervorrichtung 4. Damit auch die Spannung am Schweißbrenner 10 bzw. zwischen dem Schweißdraht 13 und dem Werkstück 16 erfaßt werden kann, ist eine weitere Leitung 45 mit der Wandlervorrichtung 42 verbunden. Die Wandlervorrichtung 42 hat die Aufgabe, die von der Meßvorrichtung 38 gemessenen Werte in digitale Signale umzuwandeln und anschließend an die Steuervorrichtung 4 weiterzuleiten.

In Fig. 3 ist eine Detaildarstellung der Oberfläche der erfindungsgemäßen Eingabe- und/oder Anzeigevorrichtung 21 gezeigt. Die Eingabe- und/oder Anzeigevorrichtung 21 ist, wie bereits in Fig. 2 beschrieben, über diverse Leitungen 23, 24 mit der Steuervorrichtung 4 bzw. der Mikroprozessorsteuerung 22 verbunden, sodaß über die an der Eingabe- und/oder Anzeigevorrichtung 21 angeordneten Einstellorgane 46 und Anzeigeorgane 47 der Schweißprozeß beeinflußt bzw. angezeigt werden kann.

Dazu ist an der Eingabe- und/oder Anzeigevorrichtung 21 ein Hauptregler 48, der bevorzugt durch einen Inkrementalgeber ausgebildet ist, angeordnet. Mit dem Hauptregler 48 ist es möglich, daß über an der Eingabe- und/oder Anzeigevorrichtung 21 angeordnete Anzeigeorgane, insbesondere LCD-Anzeigen 49, 50 der angezeigte Soll-Wert verändert werden kann. Dazu kann der Benutzer durch die beiden im Bereich der LCD-Anzeigen 49, 50 angeordneten Taster 51, 52 verschiedenste Schweißparameter auswählen. Zu den einzelnen Schweißparametern sind Soll-Werte in den Speicher 28 der Steuervorrichtung 4 hinterlegt, sodaß beim Auswählen eines Schweißparameters dieser Soll-Wert auf einer der beiden LCD-Anzeigen 49 oder 50 angezeigt wird, der anschließend über den Hauptregler 48 verändert werden kann. Dazu ist es möglich, daß in den Speicher 28 unterschiedliche Soll-Werte in Abhängigkeit von unterschiedlichen Schweißprozessen hinterlegt sein können.

Die einzelnen auszuwählenden Schweißparameter sind durch LED-Anzeigen 53 bis 59 dargestellt, wobei diese zusätzlich symbolhaft auf einer Frontplatte 60 abgebildet sind. Bei Auswahl eines Schweißparameters über die Taster 51, 52 wird von der Steuervorrichtung 4 die entsprechende LED-Anzeige 53 bis 59 aktiviert, sodaß diese zu leuchten beginnt und somit der Benutzer die ausgewählten Schweißparameter erkennen kann.

Für die einzelnen LED-Anzeigen 53 bis 59 können die Schweißparameter für den Schweißstrom, der Übertemperatur, der Materialstärke des Werkstückes, die Drahtvorschubgeschwindigkeit, die Schweißspannung, die Lichtbogenlänge sowie der Stromanstieg angezeigt bzw. über den Hauptregler 48 eingestellt werden, d.h., daß bei Auswählen eines dieser Schweißparameter ein von dem Speicher 28 vorgegebener Soll-Wert an beispielsweise der LCD-Anzeige 49 oder 50 angezeigt wird, der anschließend über den Hauptregler 48 verändert werden kann, wobei dazu der Wert, der über den Hauptregler 48 eingestellt wird, an der weiteren LCD-Anzeige 50 oder 49 abgebildet wird oder direkt an der entsprechenden LCD-Anzeige 49, 50 verändert wird. Hierzu ist es beispielsweise möglich, daß an der LCD-Anzeige 49 der Schweißstrom und an der LCD-Anzeige 50 die übrigen Schweißparameter angezeigt werden. Damit die einzelnen LED-Anzeigen 53 bis 59 also die Schweißparameter aktiviert werden können, muß der Benutzer eine der beiden Tasten 51, 52 betätigen, wodurch schrittweise die Schweißparameter ausgewählt werden können. Dazu ist es beispielsweise möglich, daß der Taster 51 für einen Rechtslauf und der Taster 52 für den Linkslauf zum Auswählen der einzelnen Schweißparameter verwendet werden kann. Selbstverständlich ist es auch möglich, daß zumindest eine zusätzliche LED-Anzeige, wie strichliert dargestellt, angeordnet ist. Diese LED-Anzeige kann dazu dienen, daß der Benutzer erkennen kann, welche der beiden LCD-Anzeigen 49, 50 aktiviert ist, d.h., daß beispielsweise bei aktivierter LED-Anzeige die LCD-anzeige aktiv ist, wogegen bei nicht aktivierter LED-Anzeige die LCD-anzeige 50 aktiv ist. Dies ist insofern von Vorteil, da dadurch der Benutzer darauf hingewiesen wird, welcher Schweißparameter verstellt werden kann.

Weiters sind an der dargestellten Eingabe- und/oder Anzeigevorrichtung 21 weitere Auswahlmöglichkeiten für weitere Schweißparameter dargestellt. Dazu sind unterschiedliche Bereiche 61 bis 64 auf der Frontplatte 60 dargestellt, die wiederum über eine Anzeigevorrichtung, insbesondere jeweils eine LED-Anzeige 65 und einer symbolhaften Darstellung an der Frontplatte 60 gezeigt sind. Die Auswahl der einzelnen Bereiche 61 bis 64 kann beispielsweise über einen Taster 66 durchgeführt werden, wobei dazu wiederum ein getakteter Ablauf der Auswahl der einzelnen Bereiche 61 bis 64 durchgeführt wird, d.h., daß durch einmaliges Betätigen des Tasters 66 der Bereich 61 aktiviert ist, wobei bei abermaliger Betätigung der Bereich 62, 63, 64 und anschließend wiederum der Bereich 61 ausgewählt werden kann.

Hat nunmehr ein Benutzer den Taster 66 betätigt, so kann dieser in dem Bereich 61 die Schweißparameter für den Schweißdrahtdurchmesser einstellen, d.h., daß durch ein Betätigen einer der beiden Taster 67, 68 die unterschiedlich vorgegebenen Soll-Werte für den Schweißdrahtdurchmesser ausgewählt werden können. Dazu ist beispielsweise der Taster 67 für den Aufwärtsverlauf und der Taster 66 für den Abwärtsverlauf zuständig. Selbstverständlich ist es möglich, daß eine beliebige Einstellung des Drahtdurchmessers vom Benutzer durchgeführt werden kann. Dazu wählt der Benutzer beispielsweise die mit "A, B" gezeichneten LED-Anzeigen 65 aus, wodurch über den Hauptregler 48 ein beliebiger Schweißdrahtdurchmesser, der an der LCD-Anzeige 50 angezeigt wird, eingestellt werden kann, wogegen bei Auswählen der restlichen LED-Anzeigen 65 ein vorgegebener Soll-Wert ausgewählt werden kann.

Aktiviert der Benutzer den Bereich 62, so ist es möglich, daß der Benutzer unterschiedliches Gas bzw. Gase auswählen kann, wobei es wiederum möglich ist, eine beliebige Gasmischung über den Hauptregler 48 einzustellen. Das Auswählen der einzelnen vorgegebenen Gasgemische ist wiederum über die Tasten 67, 68 möglich.

Aktiviert der Benutzer jedoch den Bereich 63, so kann diese über weitere Tasten 69, 70 die unterschiedlichen Schweißprozesse auswählen, d.h. daß beispielsweise in diesem Bereich die einzelnen Schweißprozesse für ein MIG-/MAG-Schweißen oder ein TIG-Schweißen usw. ausgewählt werden können. Beim Aktivieren des Bereiches 64 kann der Benutzer unterschiedliche Sonderfunktionen für das Schweißgerät 1 auswählen, die über Tasten 71, 72 auswählbar sind. Selbstverständlich ist es möglich, daß beispielsweise der Taster 66 für die Auswahl des Bereiches 61 verwendet werden kann, sodaß die restlichen Taster 67, 68, 69, 70, 71, 72 für die übrigen Bereiche 62 bis 64 verwendet werden können, wodurch ein taktweises Auswählen der einzelnen Bereiche 61 bis 64 entfallen kann.

Es kann nunmehr gesagt werden, daß das Einstellen der unterschiedlichen Schweißparameter, wie sie an der Eingabe- und/oder Anzeigevorrichtung 21, insbesondere an der Oberfläche der Frontplatte 60, dargestellt sind bzw. durch die symbolhafte Darstellung auf der Frontplatte 60, es möglich ist, daß der Benutzer auf die vorgegebenen hinterlegten Soll-Werte der einzelnen Schweißparameter Einfluß nehmen kann, d.h., daß durch die Auswahl und Veränderung der Soll-Werte ein für den Benutzer abgestimmter Schweißvorgang bzw. Schweißprozeß durchgeführt werden kann. Diese Veränderungen, die über die Eingabe- und/oder Anzeigevorrichtung 21 vom Benutzer vorgenommen werden, werden über die Leitungen 23, 24 der Steuervorrichtung 4 bzw. der Mikroprozessorsteuerung 22 übergeben, wobei anschließend die Steuervorrichtung 4 einen Steuerablauf, unter Berücksichtigung der eingestellten Schweißparameter, für den Schweißprozeß errechnet. Selbstverständlich ist es möglich, daß der Benutzer seinen eingestellten Schweißprozeß mit den ausgewählten und veränderten Schweißparametern in den Speicher 28 abspeichern kann. Dies kann beispielsweise derartig erfolgen, daß der Benutzer durch Aktivieren, beispielsweise des Bereiches 63, und durch Auswahl bzw. Aktivieren der vordefinierten LED-Anzeige 65, die symbolhaft mit einem Schweißbrenner dargestellt ist, und durch Betätigung einer Speichertaste 73 der Steuervorrichtung 4 mitteilt, daß die Einstellungen in dem Speicher 28 hinterlegt werden sollen, sodaß bei abermaliger Auswahl dieser LED-Anzeige 65 die gespeicherten Werte aus dem Speicher 28 geladen werden können und eine Schweißung mit den entsprechenden Schweißparametern durchgeführt werden kann.

Weiters weist die erfindungsgemäße Eingabe- und/oder Anzeigevorrichtung 21 im Bereich der beiden LCD-Anzeigen 49, 50 zumindest eine, bevorzugt jedoch zwei Steuerorgane 74, 75 sowie im Bereich 64, in dem bevorzugt wiederum zwei Steuerorgane 76, 77 angeordnet sind, auf. Die einzelnen Steuerorgane 74 bis 77 können beispielsweise durch eine LED-Anzeige 78 oder durch Taster ausgeführt werden. Damit der Benutzer eine Zuordnung der einzelnen Steuerorgane 74 bis 77 erkennen kann, sind auf der Frontplatte 60 die Steuerorgane 74 bis 77 mit dem Symbol "F1 bis F4" gekennzeichnet. Die Auswahl der einzelnen Steuerorgane 74 bis 77 erfolgt über die Taster 51, 52 bzw. im Bereich 64 über die Taster 71, 72.

Die Aufteilung der einzelnen Steuerorgane 74 bis 77 in die unterschiedlichen Bereiche, also im Bereich der LCD-Anzeigen 49, 50 und in dem Bereich 64 für die Sonderfunktionen des Schweißgerätes 1, wurde deshalb getroffen, da für die Steuerorgane 74 bis 77 unterschiedliche Funktionsaufgaben zugrunde liegen. Dabei ist es beispielsweise möglich, daß für die Steuerorgane 74, 75 die Anzeigevorrichtung, insbesondere die LCD-Anzeigen 49, 50 beeinflußbar sind, wogegen für die Steuerorgane 76, 77 ein Funktionsablauf hinterlegt werden kann.

Durch die Auswahl, beispielsweise eines Steuerorganes 74 bis 77, insbesondere des Steuerorganes 74, ist es nunmehr möglich, daß der Benutzer die Anzeigemöglichkeit an den LCD-Anzeigen 49 bis 50 beeinflussen kann. Dabei ist es beispielsweise möglich, daß für das Steuerorgan 74 die LCD-Anzeige 49 und für das Steuerorgan 75 die LCD-Anzeige 50 beeinflußt werden kann. Grundsätzlich ist die Funktion der LCD-Anzeigen 49, 50 derartig, daß der Benutzer durch Auswahl einer über die Tasten 51, 52 ausgewählten Schweißparameter der im Schweißprozeß für diesen Schweißparameter ermittelten Ist-Wert angezeigt wird. Durch die Anordnung der beiden Steuerorgane 74, 75 ist es nunmehr möglich, daß der Benutzer eine freidefinierbare Anzeige eines beliebigen Schweißparameters wählen kann, d.h., daß der Benutzer sich unterschiedliche Kombinationen von Ist-Werten der Schweißparametern an den beiden LCD-Anzeigen 49, 50 anzeigen lassen kann, wodurch eine benutzerdefinierte Oberfläche für das Schweißgerät 1 geschaffen wird.

Es kann grundsätzlich gesagt werden, daß bei dem dargestellten Ausführungsbeispiel die LCD-Anzeige 49 für den Schweißstrom und die LCD-Anzeige 50 für die restlichen Schweißparameter, wie der Übertemperatur, die Materialstärke, der Drahtvorschubgeschwindigkeit, die Schweißspannung, die Lichtbogenlänge bzw. der Stromanstieg angezeigt werden kann.

Durch die zusätzlich angeordneten Funktionstasten, insbesondere durch die Steuerorgane 74, 75, ist es nunmehr möglich, daß der Benutzer beispielsweise auf der LCD-Anzeige 49 jeden beliebigen Schweißparameter, wie beispielsweise der Materialstärke, der Drahtvorschubgeschwindigkeit, die Schweißspannung, die Lichtbogenlänge, den Stromanstieg und die Übertemperatur anzeigen und verändern kann. Dabei ist es möglich, daß zusätzliche nicht an der Eingabe- und/oder Anzeigevorrichtung 21 dargestellte und auswählbare Schweißparameter vom Benutzer über die Steuerorgane 74, 75 aktiviert werden können, d.h., daß beispielsweise interne Voreinstellungen des Schweißgerätes 1 über die Steuerorgane 74, 75 aufgerufen bzw. angezeigt werden können. Die internen Voreinstellungen bzw. Schweißparameter sind beispielsweise Gasvorströmung, Gasnachströmung, Nachbrennzeit, Startstrom, Slop, Endstrom, Startzeit, Endzeit, Intervallzeit, Einfädeldrehzahl, Motorstromanzeige, Schweißzeitanzeige, Betriebsstundenanzeige, Temperaturanzeigen, Netzspannung usw.

Damit sich nunmehr ein Benutzer seine benutzerdefinierte Oberfläche an der Eingabe- und/oder Anzeigevorrichtung 21 gestalten kann, muß dieser über die Taster 51, 52 eine der beiden Steuerorgane 74, 75 aktivieren. Dies wird wiederum über die Schleifenfunktion der Taster 51, 52 durchgeführt.

Nachdem der Benutzer eine der beiden-Steuerorgane 74, 75, insbesondere das Steuerorgan 74, ausgewählt bzw. aktiviert hat, kann dieser durch Betätigen des Tasters 66 die einzelnen angezeigten und internen Schweißparameter über eine Schleifenfunktion abrufen, d.h., daß durch Betätigen des Tasters 66 die an der Eingabe- und/oder Anzeigevorrichtung 21 dargestellten Schweißparameter taktweise durchgetaktet werden. Nachdem jedoch alle an der Eingabe- und/oder Anzeigevorrichtung 21 angezeigten möglichen Schweißparameter über den Taster 66 durchgetaktet wurden, werden die internen Voreinstellungen bzw. internen Schweißparameter taktweise abgearbeitet. Nachdem der Benutzer einen beliebigen Schweißparameter für das Steuerorgan 74 ausgewählt hat, kann dieser durch abermaliges Betätigen der Speichertaste 73 eine Abspeicherung bzw. Zuordnung dieses Schweißparameters durchführen.

Durch das Betätigen der Speichertaste 43 wird der Steuervorrichtung 4 mitgeteilt, daß bei Auswahl dieses Steuerorganes 74 die Steuervorrichtung 4 an der LCD-Anzeige 49 den ausgewählten und in Speicher 28 hinterlegten Schweißparameter anzeigen soll, wobei bei einem Schweißvorgang immer der Ist-Wert für den derzeitigen Schweißprozeß an der LCD-Anzeige 49 angezeigt wird.

Selbstverständlich ist es möglich, daß aufgrund der Auswahl eines Schweißparameters der voreingestellte Soll-Wert über den Hauptregler 48 verändert werden kann, d.h., daß nach Auswahl eines Schweißparameters der eingestellte Soll-Wert an der LCD-Anzeige 49 angezeigt wird, worauf der Benutzer über den Hauptregler 48 diesen Soll-Wert entsprechend verändern kann.

Diese Vorgangsweise zum Anzeigen eines bestimmten Schweißparameters für eine der beiden LCD-Anzeigen 49, 50 kann an den beiden Steuerorganen 74, 75 durchgeführt werden. Selbstverständlich ist es möglich, daß mehrere derartige Steuerorgane 74, 75 zum Anzeigen unterschiedlicher Schweißparameter an der Eingabe- und/oder Anzeigevorrichtung 21 angeordnet sein können. Es ist auch möglich, daß anstelle der beiden dargestellten LCD-Anzeigen 49, 50, mehrere derartige LCD-Anzeigen 49, 50 an der Eingabe- und/oder Anzeigevorrichtung 21 angeordnet sein können bzw. daß eine Flüssigkristallanzeige, an der mehrere Schweißparameter angezeigt werden können, die wiederum über die Steuerorgane 74, 75 frei definierbar sind, an der Frontplatte 60 positioniert sein kann. Selbstverständlich ist es auch möglich, daß anstelle einer zum Stand der Technik zählenden Frontplatte 60, die beispielsweise aus Aluminium gebildet ist, ein Bildschirm, insbesondere ein Touch-Screen, verwendet werden kann, sodaß die einzelnen Einstellorgane 46 bzw. Anzeigeorgane 47 durch einfaches Betätigen mit dem Finger auf dem Bildschirm ausgewählt werden können.

Bei den weiteren im Bereich 64 dargestellten Steuerorganen 76, 77 ist es möglich, daß der Benutzer durch Auswahl einer der beiden Steuerorgane 76, 77, beispielsweise des Steuerorganes 76 einen Funktionsablauf, der durch mehrere Arbeitsschritte bzw. Programmschritte besteht, definieren kann, d.h., daß beispielsweise für das Steuerorgan 76 ein automatisches Starten eines Drahtrückzuges für den Schweißdraht 13 abgespeichert werden kann. Dabei erfolgt das Abspeichern für die unterschiedlichsten Funktionsabläufe insofern, indem der Benutzer über den Taster 66 den Bereich 64 auswählt und anschließend über die beiden Tasten 71, 72 einen der beiden Steuerorgane 76, 77 auswählt. Hat der Benutzer beispielsweise das Steuerorgan 76 ausgewählt, so kann dieser durch Betätigen der Speichertaste 73 einen Speichervorgang aktivieren, wodurch die nachfolgend durchgeführten Arbeitsschritte bis zum abermaligen Wiederbetätigen der Speichertaste 73 aufgezeichnet bzw. im Speicher 28 gespeichert werden.

Bei dem dargestellten Schweißgerät 1 ist es beispielsweise möglich, daß eine Doppelbelegung der einzelnen Einstellorgane 46 möglich ist, d.h., daß beispielsweise durch kurzes Betätigen eines Einstellorganes 46 die dargestellte symbolhafte Funktion durchgeführt wird, wogegen bei längerem Betätigen eines Tasters, beispielsweise über eine Zeit von beispielsweise fünf Sekunden, ein anderer Funktionsmodus für das Einstellorgan 46 durchgeführt werden kann. Es wird jedoch auf die einzelnen unterschiedlich möglichen Einstellungen eines Schweißgerätes 1 nicht näher eingegangen, da jede beliebige Einstellmöglichkeit, die aus dem Stand der Technik bekannt ist, für ein derartiges Schweißgerät 1 angewendet werden kann.

Durch die Anordnung der erfindungsgemäßen Funktionstasten, insbesondere der Steuerorgane 74 bis 77, wird erreicht, daß der Benutzer seine Oberfläche beliebig gestalten kann bzw. daß Sonderfunktionen, die meist über komplizierte Einstellvorgänge durchgeführt werden müssen, den Steuerorganen 74 bis 77 zugeordnet werden können, wodurch durch Betätigen bzw. Aktivieren der Steuerorgane 74 bis 77 diese Funktionsabläufe automatisch vom Schweißgerät 1 durchgeführt werden.

Grundsätzlich kann zu dem Funktionsablauf gesagt werden, daß bei einem derartigen Schweißgerät 1 über die Eingabe- und/oder Anzeigevorrichtung 21 die unterschiedlichsten Schweißparameter vom Benutzer über den Hauptregler 48 eingestellt bzw. die vorgegebenen Soll-Werte verändert werden können. Durch das Verändern bzw. Voreinstellen der Schweißparameter wird von der Steuervorrichtung 4 ein entsprechender Schweißvorgang bzw. Schweißprozeß errechnet und es kann ein Schweißprozeß mit den entsprechenden Schweißparametern durchgeführt werden.

Dabei ist es bei einem derartigen Schweißgerät 1 möglich, daß zur Anzeige und/oder zur Schweißprozeßsteuerung des Schweißgerätes 1 mehrere an der Eingabe- und/oder Anzeigevorrichtung 21, Steuerorgane 74 bis 77 angeordnet sein können, wobei die auf diese Steuerorgane 74 bis 77 belegten Funktionen in dem Speicher 28 von der Steuervorrichtung 4 automatisch hinterlegt werden, d.h., daß durch Aktivieren der Speichertaste 73 die Steuervorrichtung 4 mit einem Signal beaufschlagt wird, daß an der entsprechend ausgewählten Funktionstaste, insbesondere dem Steuerorgan 74 bis 77 die hinterlegten bzw. eingestellten Schweißparameter in einem bestimmten Speicherbereich, der für die einzelnen Steuerorgane 74 bis 77 zur Verfügung gestellt wird, abgespeichert werden.

Wird jedoch das entsprechende Steuerorgan 74 bis 77 ausgewählt, so wird von der Steuervorrichtung 4 die hinterlegten Funktionsabläufe bzw. die hinterlegten Daten in den Hauptspeicher der Steuervorrichtung 4 geladen, sodaß anschließend die Eingabe- und/oder Anzeigevorrichtung 21 bzw. die restlichen Komponenten des Schweißgerätes 1 entsprechend angesteuert werden. Dabei ist es beispielsweise möglich, daß bei Belegung der Steuerorgane 74, 75 mit einer Anzeigefunktion ein bestimmter Schweißparameter, der jedoch nicht den dargestellten Schweißparametern an der Frontplatte 60 entsprechen muß, an einer der beiden LCD-Anzeigen 49, 50 angezeigt werden, wogegen beispielsweise bei Belegung der Steuerorgane 76, 77 mit einem Funktionsablauf dieser bei Auswahl eines der beiden Steuerorgane 76, 77 gestartet wird. Dabei ist es beispielsweise möglich, daß ein Funktionsablauf für einen Einfädelvorgang des Schweißdrahtes 30 bzw. für eine Gasprüfung oder sonstige Funktionsabläufe hinterlegt werden können. Es ist auch beispielsweise möglich, daß anstelle der Steuerorgane 74 bis 77 ein Wahlschalter angeordnet sein kann, auf dem durch unterschiedliche Stellung des Wahlschalters unterschiedliche Funktionen abgespeichert werden können. Selbstverständlich ist es auch möglich, daß zum Speichern der Schweißeinstellungen, beispielsweise des Anzeigemoduses eines Funktionsmoduses, der Benutzer eines der Steuerorgane 74 bis 77 aktiviert und anschließend mit der Speichertaste 73 die Einstellmöglichkeiten aktiviert, worauf nach dem Einstellen des Schweißgerätes 1 durch abermaliges Drücken der Speichertaste 73 die Einstellungen gespeichert werden.

Weiters ist es möglich, daß die Steuerorgane 74 bis 77 mit mehreren unterschiedlichen Funktionen belegt werden können, wobei dabei die Zuordnung der unterschiedlichen Funktionen in bezug auf den eingestellten Schweißprozeß gegeben ist, d.h., daß beispielsweise beim Einstellen eines MIG/MAG-Schweißprozesses entsprechende Schweißparameter bzw. Funktionsabläufe, für den MIG/MAG-Schweißprozeß hinterlegt werden können, wogegen bei Auswahl eines TIG-Schweißprozesses die gleichen Steuerorgane 74 bis 77 mit Funktion für diesen Schweißprozeß hinterlegt werden können.

Möglich ist auch, dass das Steuerorgan für unterschiedliche Betriebsarten des Schweißgerätes mehrfach belegt werden kann.

Bei einem derartigen Schweißgerät 1 ist es auch möglich, daß anstelle des Hauptreglers 48 mehrere Taster, insbesondere zwei Taster angeordnet sein können, über die durch eine Plus-/Minusfunktion der dargestellte Soll-Wert verändert werden kann. Es ist jedoch möglich, daß bei Verwendung eines Bildschirmes oder Flüssigkrislallameige anstelle einer Frontplatte 60 die Positionen der einzelnen Anzeigemögliehkeiten bzw. Tastenbelegungen vom Benutzer frei definiert werden können.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Kühlkreislauf
- 19: Strömungswächter
- 20: Wasserbehälter

- 21: Eingabe- und/oder Anzeigevorrichtung
- 22: Mikroprozessorsteuerung
- 23: Leitung
- 24: Leitung
- 25: Eingabevorrichtung

- 26: Ausgabevorrichtung
- 27: Bussystem
- 28: Speicher
- 29: Leitung
- 30: Inverterstromquelle

- 31: Versorgungsleitung
- 32: Versorgungsleitung
- 33: Spannungsversorgungsnetz
- 34: Versorgungsleitung
- 35: Hochfrequenzgenerator

- 36: Leitung
- 37: Leitung
- 38: Meßvorrichtung
- 39: Shunt
- 40: Leitung

- 41: Leitung
- 42: Wandlervorrichtung
- 43: Leitung
- 44: Leitung
- 45: Leitung

- 46: Einstellorgan
- 47: Anzeigeorgan
- 48: Hauptregler
- 49: LCD-Anzeige
- 50: LCD-Anzeige

- 51: Taste
- 52: Taste
- 53: LED-Anzeige
- 54: LED-Anzeige
- 55: LED-Anzeige

- 56: LED-Anzeige
- 57: LED-Anzeige
- 58: LED-Anzeige
- 59: LED-Anzeige
- 60: Frontplatte

- 61: Bereich
- 62: Bereich
- 63: Bereich
- 64: Bereich
- 65: LED-Anzeige

- 66: Taste
- 67: Taste
- 68: Taste
- 69: Taste
- 70: Taste

- 71: Taste
- 72: Taste
- 73: Speichertaste
- 74: Steuerorgan
- 75: Steuerorgan

- 76: Steuerorgan
- 77: Steuerorgan
- 78: LED-Anzeige

## Patentansprüche

1. Steuervorrichtung (4) zum Steuern eines Schweißgerätes mit einer Mikroprozessorsteuerung (22) mit einem Speicher und einer Anzeigevorrichtung (21) zur einstellbaren Anzeige von unterschiedlichen Betriebsdaten bzw. Funktionen des Schweißgerätes, sowie einer Eingabevorrichtung (21) für Steuerbefehle des Schweißgerätes (1) mit mehreren, zugeordneten Einstellorganen (46, 48, 51, 52) zur Auswahl und Einstellung von unterschiedlichen, vorgegebenen anzeigbaren Sollwerten von Schweißparametern, sowie mit einer Stromquelle zur Anspeisung des Schweißgerätes und insbesondere einem über Leitungen mit dem Schweißgerät verbundenen Schweißbrenner, wobei zum Steuern des Schweißgerätes (1) die Steuervorrichtung (4) zumindest einen frei belegbaren Speicher (28) für mehrere Betriebsdaten und deren Funktionsabläufe aufweist, der manuell einem frei wählbaren Steuerorgan (74-77) zuordenbar ist und in dem Speicher (28) ein, aus mehreren Arbeits- bzw. Programmschritten bestehender Funktionsablauf und dessen Sollwerte auf einem Anzeigeorgan (47) darstellbar, sowie manuell veränderbar sind und zum Aufruf durch das zugeordnete Steuerorgan (74-77) in dem Speicher (28) hinterlegt sind, wobei das Steuerorgan (74-77) mit unterschiedlichen, jeweils einem Schweißprozeß zuordenbaren Funktionsabläufen mehrfach belegbar ist, wobei dabei die Zuordnung der unterschiedlichen Funktionen in bezug auf den eingestellten Schweißprozeß gegeben ist und das Schweißgerät (1) bei Betätigung des Steuerorgans (74-77) mit dem im Speicher (28) für den jeweils gewählten Schweißprozeß hinterlegten Funktionsablauf automatisch gesteuert ist.

2. Steuervorrichtung nach Anspruch 1, **dadurch gekennzeichnet, daß** für unterschiedliche Funktionen, wie beispielsweise einem Anzeigemodus oder einem Steuermodus mehrere unterschiedliche Steuerorgane (74-77) angeordnet sind.

3. Steuervorrichtung nach Anspruch 1 oder 2, **dadurch gekennzeichnet, daß** die Eingabe- und/oder Anzeigevorrichtung (21) durch einzelne Einstellorgane (46) und Anzeigeorgane (47) gebildet ist.

4. Steuervorrichtung nach einem der vorhergehenden Ansprüche, **dadurch gekennzeichnet, daß** das Anzeigeorgan (47) beispielsweise durch eine LED-Anzeige (53-59, 78), eine LCD-Anzeige (49, 50), eine Digital- Anzeige, einen Bildschirm oder einen Touch-Screen gebildet ist.

5. Verfahren zum Steuern eines Schweißgerätes, bei dem über eine Eingabe- und/oder Anzeigevorrichtung unterschiedliche Schweißparameter, wie beispielsweise der Schweißstrom, der Schweißdrahtdurchmesser, die Betriebsart des Schweißgerätes usw. eingestellt bzw. verändert und in einer, durch eine Mikroprozessorsteuerung (22) gebildeten Steuervorrichtung (4) abgespeichert werden können, und die Anzeigevorrichtung (21) über zugeordnete Einstellorgane (46) mit der Anzeige von Funktionsabläufen und Schweißparametern belegt wird und mit der Eingabevorrichtung (21) unterschiedliche, vorgegebene angezeigte Sollwerte der Schweißparameter und/oder Funktionsabläufe ausgewählt und eingestellt werden, worauf von der Steuervorrichtung entsprechend den eingestellten Schweißparametern bzw. dem hinterlegten Funktionsablauf das Schweißgerät für einen Schweißprozeß angesteuert wird, und daß gleichzeitig mit dem Schweißprozeß zumindest einer der einstellbaren Schweißparameter an der Eingabe- und/oder Anzeigevorrichtung angezeigt wird, wobei zur Schweißprozeßsteuerung des Schweißgerätes ein frei belegbarer Speicher (28) für mehrere Schweißparameter und deren Funktionsablauf einem manuell frei wählbaren Steuerorgan (74-77), das an der Eingabe- und/oder Anzeigevorrichtung angeordnet ist, zugeordnet wird, indem ein, aus mehreren Schweißparametern und Funktionen bestehender Funktionsablauf und dessen Sollwerte manuell verändert, auf einem Anzeigeorgan (47) dargestellt, sowie zum Aufruf durch das belegte Steuerorgan in dem Speicher (28) abgespeichert und einem bestimmten Schweißprozeß zugeordnet wird, wobei das Steuerorgan (74-77) mit unterschiedlichen, jeweils einem Schweißprozeß zugeordneten Funktionsabläufen mehrfach belegbar ist, wobei dabei die Zuordnung der unterschiedlichen Funktionen in bezug auf den eingestellten Schweißprozeß gegeben ist und bei Betätigen des Steuerorgans (74-77) das Schweißgerät (1) mit dem im Speicher (28) für den jeweils gewählten Schweißprozeß hinterlegten Funktionsablauf automatisch gesteuert wird.

6. Verfahren nach Anspruch 5, **dadurch gekennzeichnet, daß** bei Belegung des Steuerorganes (74-77) mit einer Anzeigefunktion die Steuervorrichtung eine Anzeigevorrichtung der Eingabe- und/oder Anzeigevorrichtung (21) mit dem entsprechend ausgewählten und dem derzeitig aufweisenden Zustand dieses Schweißparameters ansteuert, worauf an der Anzeigevorrichtung, insbesondere an der LCD-Anzeige der Wert angezeigt wird.

7. Verfahren nach einem der Ansprüche 5 bis 6, **dadurch gekennzeichnet, daß** über die Steuerorgane zusätzliche Schweißparameter, wie beispielsweise der Schweißstrom, die Übertemperatur, die Materialstärke des Werkstückes, Drahtvorschubgeschwindigkeit, Schweißspannung, Lichtbogenlänge, Stromanstieg und interne Voreinstellungen Gasvorströmung, Gasnachströmung, Nachbrennzeit, Startstrom, Slop, Endstrom, Startzeit, Endzeit, Intervallzeit, Einfädeldrehzahl, Motorstromanzeige, Schweißzeitanzeige, Betriebsstundenanzeige, Temperaturanzeigen, Netzspannung usw. angezeigt bzw. über den Hauptregler (48) eingestellt werden können.

8. Verfahren nach einem der Ansprüche 5 bis 7, **dadurch gekennzeichnet, daß** das Steuerorgan (74-77) durch einen Taster oder einen Wahlschalter gebildet wird.

9. Verfahren nach einem der Ansprüche 5 bis 8, **dadurch gekennzeichnet, daß** zum Speichern der über das Steuerorgan abrufbaren Funktion bzw. des Funktionsablaufes zuerst das Schweißgerät über die Eingabe- und/oder Anzeigevorrichtung (21) eingestellt wird, worauf durch Betätigung eines weiteren Einstellorganes, insbesondere einer Speichertaste (73) die eingestellte Funktion für das frei belegbare Steuerorgan (74-77) im Speicher (28) hinterlegt wird.

10. Verfahren nach einem der Ansprüche 5 bis 9, **dadurch gekennzeichnet, daß** mehrere frei belegbare Steuerorgane (74-77) für unterschiedliche Funktionen an der Eingabe- und/oder Anzeigevorrichtung angeordnet sind.

11. Verfahren nach einem der Ansprüche 5 bis 10, **dadurch gekennzeichnet, daß** zum Speichern der Funktion für ein frei belegbares Steuerorgan (74-77) zuerst das weitere Einstellorgan, insbesondere die Speichertaste (73) aktiviert wird, worauf anschließend das frei belegbare Steuerorgan aktiviert wird, wodurch die ausgewählte Funktion dem entsprechenden Steuerorgan zugeordnet wird.

12. Verfahren nach einem der Ansprüche 5 bis 11, **dadurch gekennzeichnet, daß** durch Aktivieren des frei belegbaren Steuerorganes (74-77) über eine vorgegebene Zeitdauer die ausgewählte Funktion gespeichert wird.

13. Verfahren nach einem der Ansprüche 5 bis 12, **dadurch gekennzeichnet, daß** mehrere Funktionen zum Steuern des Schweißgerätes einem Steuerorgan (74-77) zugeordnet werden, wobei die einzelnen Funktionen durch mehrmaliges Betätigen des Steuerorganes abgerufen werden können.

## Claims

1. Control system (4) for controlling a welding apparatus, with a micro-processor controller (22) incorporating a memory and a display device (21) which can be set to display various operating data or functions of the welding apparatus, as well as an input device (21) for control commands of the welding apparatus (1) with several co-operating setting elements (46, 48, 51, 52) for selecting and setting various pre-defined desired values of welding parameters which can be displayed, as well as a power source for supplying the welding apparatus and in particular a welding torch connected to the welding apparatus via lines, and in order to control the welding apparatus (1), the control system (4) has at least one freely programmable memory (28) for various operating data and their function sequences which can be manually assigned to a freely selectable control element (74-77) and a function sequence consisting of several operating or programme steps and its desired values stored in the memory (28) can be displayed on a display element (47) and can be manually changed, and are stored in the memory (28) so that they can be retrieved by means of the relevant control element (74-77), which control element (74-77) can be repeatedly programmed with different function sequences associated with a respective welding process, and the different functions are assigned on the basis of the set welding process, and when the control element (74-77) is operated, the welding apparatus (1) is automatically controlled on the basis of the function sequence stored in the memory (28) for the respective welding process selected.

2. Control system as claimed in claim 1, **characterised in that** several different control elements (74-77) are provided for different functions, such as a display mode or a control mode, for example.

3. Control system as claimed in claim 1 or 2, **characterised in that** the input and/output device (21) is provided in the form of individual setting elements (46) and display elements (47).

4. Control system as claimed in one of the preceding claims, **characterised in that** the display element (47) is provided in the form of an LED display (53-59, 78), an LCD display (49, 50), a digital display, a screen or a touch screen, for example.

5. Method of controlling a welding apparatus, whereby different welding parameters, such as the welding current, the welding wire diameter, the operating mode of the welding apparatus, etc., for example, can be set and edited by means of an input and/or display device and stored in a control system (4) provided in the form of a micro-processor controller (22), and the display device (21) is loaded so as to display function sequences and welding parameters by means of co-operating setting elements (46), and different, predefined displayed desired values for the welding parameters and/or function sequences can be selected and set by means of the input device (21), whereupon the welding apparatus is activated by the control system for a welding process based on the set welding parameters and the stored function sequence, and at least one of the settable welding parameters is displayed on the input and/or display device simultaneously with the welding process and, in order to control the welding process of the welding apparatus, a freely programmable memory (28) for several welding parameters and their function sequence co-operates with a manual, freely selectable control element (74-77) disposed on the input and/or display element, and a function sequence consisting of several welding parameters and functions and its desired values is displayed on a display element (47) when manually changed, and is stored in the memory (28) by means of the programmed control element and assigned to a specific welding process for retrieval, and the control element (74-77) can be repeatedly programmed with different function sequences assigned to a respective welding process, and the different functions are assigned on the basis of the set welding process, and when the control element (74-77) is operated, the welding apparatus (1) is automatically controlled on the basis of the function sequence stored in the memory (28) for the respective welding process selected.

6. Method as claimed in claim 5, **characterised in that** when loading the control element (74-77) with a display function, the control system activates a display device of the input and/or display device (21) on the basis of the corresponding selected and current status of this welding parameter, whereupon the value is displayed on the display device, in particular on the LCD display.

7. Method as claimed in one of claims 5 to 6, **characterised in that** additional welding parameters can be displayed and set via the main controller (48), such as the welding current, the thermal temperature, the material thickness of the workpiece, wire feed rate, welding voltage, arc length, increase in current and internal default settings for gas inflow, gas outflow, after-glow time, start-up current, stoppage, final current, start time, finish time, interval time, line-up speed, motor current display, welding time display, operating hours display, temperature displays, mains voltage, etc..

8. Method as claimed in one of claims 5 to 7, **characterised in that** the control element (74-77) is provided in the form of a push button or selector switch.

9. Method as claimed in one of claims 5 to 8, **characterised in that**, in order to store the function or function sequence which can be retrieved by means of the control element, the welding apparatus is firstly set up by means of the input and/or display device (21), after which, by operating another setting element, in particular a memory key (73), the set function for the freely programmable control element (74-77) is stored in the memory (28).

10. Method as claimed in one of claims 5 to 9, **characterised in that** several freely programmable control elements (74-77) for different functions are disposed on the input and/or display device.

11. Method as claimed in one of claims 5 to 10, **characterised in that**, in order to store the function for a freely programmable control element (74-77), the other setting element, in particular the memory key (73), is activated, after which the freely programmable control element is activated, as a result of which the selected function is assigned to the corresponding control element.

12. Method as claimed in one of claims 5 to 11, **characterised in that** by activating the freely programmable control element (74-77) for a predefined period, the selected function is stored.

13. Method as claimed in one of claims 5 to 12, **characterised in that** several functions for controlling the welding apparatus are assigned to a control element (74-77), and the individual functions can be retrieved by operating the control element several times.

## Revendications

1. Dispositif de commande (4) pour commander un appareil à souder avec une commande de microprocesseur (22) avec une mémoire et un dispositif d'affichage (21) pour l'affichage réglable de différentes données de fonctionnement respectivement fonctions de l'appareil à souder, et avec un dispositif d'entrée (21) des instructions de commande de l'appareil à souder (1) avec plusieurs organes de réglage associés (46, 48, 51, 52) pour la sélection et le réglage de différentes valeurs de consigne prédéfinies, pouvant être affichées de paramètres de soudage, et avec une source de courant pour alimenter l'appareil à souder et en particulier un chalumeau relié par des lignes à l'appareil à souder, où pour la commande de l'appareil à souder (1), le dispositif de commande (4) présente au moins une mémoire (28) pouvant être chargée librement pour plusieurs données de fonctionnement et leurs séquences de fonctionnement, qui peut être attribué manuellement à un organe de commande pouvant être sélectionné librement de (74-77), et dans la mémoire (28), une séquence de fonctionnement constituée de plusieurs étapes de travail respectivement de programme et ses valeurs de consigne peuvent être représentées sur un organe d'affichage (47) et peuvent être modifiées manuellement et sont stockées, en vue d'être appelées par l'organe de commande associé (74-77) dans la mémoire (28), où peuvent être attribuées plusieurs fois à l'organe de commande (74-77) des séquences de fonctionnement différentes, pouvant être associées à chaque fois à un processus de soudage, où dans ce cas, on dispose de l'attribution des différentes fonctions se rapportant au processus de soudage réglé, et l'appareil à souder (1), lors de l'actionnement de l'organe de commande (74-77), est commandé automatiquement par la séquence de fonctionnement stockée dans la mémoire (28) pour le processus de soudage respectivement sélectionné.

2. Dispositif de commande selon la revendication 1, **caractérisée en ce que** pour des fonctions différentes, comme par exemple un mode d'affichage ou un mode de commande, plusieurs organes de commande différents (74-77) sont disposés.

3. Dispositif de commande selon la revendication 1 ou 2, **caractérisé en ce que** le dispositif d'entrée et/ou d'affichage (21) est formé par des organes de réglage (46) et organes d'affichage (47) individuels.

4. Dispositif de commande selon l'une des revendications précédentes, **caractérisé en ce que** l'organe d'affichage (47) est formé par exemple par un affichage DEL (53-59, 78), un affichage à cristaux liquides (49-50), un affichage numérique, un écran ou un écran tactile.

5. Procédé de commande d'un appareil à souder, dans lequel, par un dispositif d'entrée et/ou d'affichage, différents paramètres de soudage, comme par exemple le courant de soudage, le diamètre du fil d'apport, le mode de fonctionnement de l'appareil à souder etc ... peuvent être réglés respectivement modifiés et stockés dans un dispositif de commande (4) formé par une commande de microprocesseur (22), et au dispositif d'affichage (21), par des organes de réglage associés (46), est attribué l'affichage de séquences de fonctionnement et de paramètres de soudage, et par le dispositif d'entrée (21), différentes valeurs de consigne prédéfinies affichées des paramètres de soudage et/ou des séquences de fonctionnement sont sélectionnées et réglées, et ensuite par le dispositif de commande, conformément aux paramètres de soudage réglés respectivement à la séquence de fonctionnement stockée, l'appareil à souder est commandé pour un processus de soudage et en ce que, simultanément avec le processus de soudage, au moins l'un des paramètres de soudage réglables est affiché au dispositif d'entrée et/ou d'affichage, où pour la commande du processus de soudage de l'appareil à souder, une mémoire (28) pouvant être chargée librement de plusieurs paramètres de soudage et leur séquence de fonctionnement est associée à un organe de commande (74-77) pouvant être sélectionné librement manuellement, qui est disposé au dispositif d'entrée et/ou d'affichage, en ce qu'une séquence de fonctionnement constituée de plusieurs paramètres de soudage et de fonctions et ses valeurs de consigne est modifiée manuellement, est représentée sur un organe d'affichage (47) et est stockée, en vue d'être appelée par l'organe de commande chargé, dans la mémoire (28) et est associée à un processus de soudage défini, où peuvent être attribuées plusieurs fois à l'organe de commande (74-77) différentes séquences de fonctionnement associées à chaque fois à un processus de soudage, où dans ce cas on dispose de l'attribution des fonctions différentes se rapportant au processus de soudage réglé, et que lors de l'actionnement de l'organe de commande (74-77), l'appareil à souder (1) est commandé automatiquement par la séquence de fonctionnement stockée dans la mémoire (28) pour le processus de soudage respectivement sélectionné.

6. Procédé selon la revendication 5, **caractérisé en ce que** lors de l'attribution à l'organe de commande (74-77) d'une fonction d'affichage, le dispositif de commande commande un dispositif d'affichage du dispositif d'entrée et/ou d'affichage (21) avec le paramètre de soudage sélectionné d'une manière correspondante et dans l'état actuel de celui-ci, à la suite de quoi le dispositif d'affichage, en particulier l'affichage à cristaux liquides, affiche la valeur.

7. Procédé selon l'une des revendications 5 à 6, **caractérisé en ce que** des paramètres de soudage additionnels, comme par exemple le courant de soudage, la température supérieure, l'épaisseur de matériau de la pièce, la vitesse de poussée de fil, la tension de soudage, la longueur d'arc, la montée du courant et des préréglages internes, le pré-écoulement de gaz, le post-écoulement de gaz, le temps de post-combustion, le courant de démarrage, l'inclinaison, le courant final, le temps de démarrage, le temps final, le temps d'intervalle, le nombre de tours d'enfilage, l'indication du courant du moteur, l'indication du temps de soudage, l'indication des heures de fonctionnement, les indications de température, la tension du secteur etc...peuvent être affichés par les organes de commande respectivement réglés par le dispositif de réglage principal (48).

8. Procédé selon l'une des revendications 5 à 7, **caractérisé en ce que** l'organe de commande (74-77) est formé par une touche ou un commutateur de sélection.

9. Procédé selon l'une des revendications 5 à 8, **caractérisé en ce que** pour le stockage de la fonction respectivement de la séquence de fonctionnement pouvant être appelée par l'organe de commande, tout d'abord l'appareil à souder est réglé par le dispositif d'entrée et/ou d'affichage (21), et ensuite, par l'actionnement d'un autre organe de réglage, en particulier d'une touche de stockage (73), la fonction réglée pour l'organe de commande pouvant être chargé librement (74-77) est stockée dans la mémoire (28).

10. Procédé selon l'une des revendications 5 à 9, **caractérisé en ce que** plusieurs organes de commande pouvant être chargés librement (74-77) pour des fonctions différentes sont disposés au dispositif d'entrée et/ou d'affichage.

11. Procédé selon l'une des revendications 5 à 10, **caractérisé en ce que** pour le stockage de la fonction, pour un organe de commande (74-77) pouvant être chargé librement, tout d'abord l'autre organe de réglage, en particulier la touche de mémorisation (73) est activée, et ensuite l'organe de commande pouvant être chargé librement est activé, par quoi la fonction sélectionnée est associée à l'organe de commande correspondant.

12. Procédé selon l'une des revendications 5 à 11, **caractérisé en ce que** par l'activation d'un organe de commande pouvant être chargé librement (74-77) pendant une durée prédéterminée, la fonction sélectionnée est stockée.

13. Procédé selon l'une des revendications 5 à 12 **caractérisé en ce que** plusieurs fonctions pour la commande de l'appareil à souder sont associées à un organe de commande (74-77), où les différentes fonctions peuvent être appelées par un actionnement à plusieurs reprises de l'organe de commande.
